# EUROPÄISCHE PATENTANMELDUNG

(11) **EP 1 291 121 A2**
(43) Veröffentlichungstag der Anmeldung: **12.03.2003**
(21) Anmeldenummer: 02016579.1
(22) Anmeldetag: 25.07.2002
(51) Int. Cl.: B23P 11/00, B21K 25/00, H01H 11/00

(54) **Befestigungsverfahren, Montagewerkzeug und Stützhebel für ein Schaltschloss eines Leistungsschalters, bzw. Lasttrennschalters**

(30) Priorität: 11.09.2001 DE 10144588
(71) Anmelder: Moeller GmbH, 53115 Bonn (DE)
(72) Erfinder: Zabrocki, Bogdan, 53819 Neunkirchen-Seelscheid (DE); Eifert, Guido, 47178 Duisburg (DE)

(57) **Zusammenfassung**

Die Erfindung betrifft ein Verfahren zur Festlegung einer Achse an einem flachen Bauteil, ein Montagewerkzeug für die Befestigung der Achse in dem Bauteil und einen nach dem Verfahren gebildeten Stützhebel für ein Schaltschloss. Um den Festsitz der Achse 10 in einer Bohrung 22 zu erhalten, wird die Achse 10 unter Verwendung des Presswerkzeugs 50 in axialer Richtung gestaucht. Das Werkzeug 50 umfasst eine Druckhülse 52, welche den Umfang der Bohrung staucht. Die dabei entstehende Materialverdrängung 26 dringt in den Raum zwischen Bohrwandung und Achse ein und legt die Achse fest.

## Beschreibung

Die Erfindung betrifft ein Verfahren zur Festlegung einer Achse an einem flachen Bauteil in Anwendung bei einem Schaltschloss eines Leistungsschalters, bzw. Laststrennschalters, ein Montagewerkzeug für die Befestigung der Achse in dem Bauteil und einen nach dem Verfahren gebildeten Stützhebel für ein Schaltschloss.

Zur Festlegung einer Achse an einem Bauteil können Schweiß- oder Lötverfahren eingesetzt werden. Diese Verfahren haben den Nachteil, dass durch die thermische Behandlung die Maßhaltigkeit nicht gewährleistet ist.

Es sind Verfahren bekannt, wo mit Hilfe einer Drückrolle oder eines Rändelwerkzeugs auf einer Welle ein rund-umlaufender Wulst gebildet wird (DE 28 50 423 A1, EP 0340128 A1). Die plastische Materialverformung ist mit einer Materialverdrängung in den zwischen Welle und Bohrung vorhandenen Spalt hinein verbunden. So wird die Welle an einem Maschinenteil festgelegt. Solche Verfahren sind nicht für feinmechanische Bauteile, insbesondere nicht für kleinteilige Bauteile geeignet, da bei Wellen mit kleinen Durchmessern kein Material für die Materialverdrängung zu Verfügung steht und das Rändelwerkzeug kaum in Miniaturausführung brauchbar ist.

Ein wieder anderes Verfahren für die Herstellung einer Lagerstelle für eine möglichst spielfreie Lagerung einer drehbaren Achse in einem Bauteil, besteht darin, dass in eine Bohrung des Bauteils eine Gleitlagerbuchse eingeführt wird, wobei die Gleitlagerbuchse vor dem Einpressen in die Bohrung derart bemessen ist, dass sie spielbehaftet in die Bohrung eingebracht ist. Die Gleitlagerbuchse wird durch axiales Pressen mit einem Presswerkzeug derart deformiert, dass sie mit ihrem Außenumfang spielfrei an die die Bohrung begrenzende Wandung gepreßt wird (DE 19646777 A1). Ein solches Verfahren ist zu aufwendig, wenn es um die unlösbare Festlegung einer Achse in einem Bauteil geht, weil ein weiteres Element (hier die Gleitlagerbuchse) notwendig ist.

Der Erfindung liegt daher die Aufgabe zugrunde, ein einfaches Verfahren anzugeben, mit dem eine Achse mit hoher Präzision und ohne weitere Bauelemente an einem flachen Bauteil, insbesondere in Anwendung bei einem Schaltschloss eines Leistungsschalters, bzw. Laststrennschalters, festgelegt werden kann. Weiterhin sollen ein nach dem Verfahren befestigter Stützhebel und das Befestigungsverfahren selbst angegeben werden.

Die Aufgabe wird erfindungsgemäß durch die kennzeichnenden Merkmale der unabhängigen Ansprüche gelöst. Die abhängigen Ansprüche beschreiben vorteilhafte Weiterbildungen der Erfindung. In den Nebenansprüchen werden ein Montagewerkzeug und die Bauteil-Achsen-Verbindung beansprucht.

Zur Herstellung der erfindungsgemäßen Verbindung können also Bauteile mit größeren Fertigungstoleranzen verwendet werden, als dies bei bisherigen Verbindungen der Fall war, wobei diese Fertigungstoleranzen durch Deformieren des Randes der Bohrung durch axiales Pressen ausgeglichen werden. Mit der erfindungsgemäßen Verbindung wird eine sichere Befestigung erreicht, die durch weitere Ausgestaltungen gegen extreme Drehkräfte auch verstärkt werden kann. Durch axiales Pressen des flachen Bauteils am Umfang der Bohrung parallel zur Achse mittels eines hülsenförmigen Presswerkzeugs wird Material des flachen Bauteils im Bereich der Bohrung plastisch verformt und in das Bohrungsinnere gepresst, wodurch die Achse in der Bohrung festgelegt ist.

Das Verfahren zur unlösbaren Festlegung einer Achse in einem flachen Bauteil, insbesondere zur Befestigung einer Achse in einem Stützhebel eines Schaltschlosses, umfasst folgende Verfahrensschritte:
- Anordnen der mit zwei Durchmessern, bzw. einer Stosskante (oder Bund) ausgebildeten Achse in einer Bohrung des Bauteils (welches ein flacher Stützhebel sein kann), wobei die Achse mit der Stosskante des größeren Durchmessers gegen den Umfang der Bohrung zur Anlage kommt und die Achse spielbehaftet in der Bohrung aufgenommen wird,
- Pressen des flachen Bauteils im Bereich der Bohrung parallel zur Achse mittels eines rohrförmigen Presswerkzeugs (zylindrische Druckhülse), welches gegen den Umfang der Bohrung gepresst wird, so dass der Umfang derart verformt wird, dass die durch das Pressen gebildete Materialverdrängung des Bauteils in das Bohrungsinnere tritt und die Achse am kleineren Durchmesser kraftschlüssig in der Bohrung festgelegt wird.

Vorteilhafte Weiterbindungen des Verfahrens bestehen in folgendem:

Zum Festlegen der Achse in dem Bauteil und zur Führung des rohrförmig ausgebildeten Presswerkzeugs wird ein aus zwei mit je einer Aufnahmebohrung versehene Montageplatten bestehendes Montagewerkzeug eingesetzt, in das das Bauteil mit in seiner Bohrung aufgenommenen Achse zwischen die Montageplatte einlegt wird, wobei in der Aufnahmebohrung einer der beiden Montageplatte das Presswerkzeug die Achse umfassend und in der Aufnahmebohrung der anderen Montageplatte die Achse zur Aufnahme kommt und der Umfang der Bohrung für die Materialverdrängung mit dem Presswerkzeug beaufschlagt wird.

Die Materialverdrängung wird hinein in einen in der Achse vorhandenen Freiraum vorgenommen. Ein solcher Freiraum kann eine oder mehrere Nuten sein. Die Lage der Nuten kann achsparallel (eine oder mehere Längsnuten) oder auch quer zur Achse (eine oder mehrere Ringnuten) sein.

Nach Einlegen der Achse in das Montagewerkzeug sollte die Achse von einer Druckfeder derart beaufschlagt werden, dass die Stosskante des größeren Durchmessers der Achse gegen den Umfang der Bohrung zur Anlage kommt. Damit wird eine genaue Positionierung erreicht.

Weiterhin wird ein mit einer Achse versehener flacher Stützhebel für ein Schaltschloss, bestehend aus dem Stützhebel mit einer Bohrung für die Aufnahme der Achse mit genügend Anfangsspiel, um die Achse leicht einzuführen, beansprucht. Die Achse wird in der Bohrung mit dem zuvor beschriebenen Pressverfahren befestigt. Für den Stützhebel ist wesentlich, dass er am Umfang der Bohrung eine ringförmige Materialverdrängung (eine Wulst) aufweist, die durch Pressen oder Stauchen des Werkstoffs am Umfang der Bohrung des Stützhebels durch plastische Verformung erzielt wird, indem auf den Umfang der Bohrung Druck ausgeübt wird, wobei ein Teil der Materialverdrängung einen Raum in der Bohrung zwischen Bohrung und Achsfläche wenigstens teilweise ausgefüllt und damit die Achse im Stützhebel kraftschlüssig festgelegt ist.

Vorteilhafte Weiterbildungen bestehen darin, dass in der Achse ein Freiraum vorhanden ist, in den die Materialverdrängung eintreten kann. Ein solcher kann mindestens eine achsumlaufende Nut (eine oder mehrere Ringnuten) oder mindestens eine in Achsrichtung verlaufende Einkerbung (eine oder mehrere Längskerben) sein. Mit der Materialverdrängung in Längskerben wird das Verdrehen der Achse beschränkt.

Gegenstand der Erfindung ist auch ein Montagewerkzeug zum Herstellen der erfindungsgemäßen Verbindung. Dieses erfindungsgemäße Werkzeug umfasst im wesentlichen eine zylindrische Druckhülse als Stauchwerkzeug und eine obere und einer untere Montageplatte. Einzelheiten finden sich in der Figurenbeschreibung.

Weitere Einzelheiten und Vorteile der Erfindung ergeben sich aus dem folgenden, anhand von Figuren erläutertem Ausführungsbeispiel. Es zeigen
- Figur 1:: eine Schnittzeichnung durch das Montagewerkzeug mit eingelegter Achse und flachem Stützhebel,
- Figur 2:: einen vergrößerten Ausschnitt aus Fig. 1 vor der Verformung,
- Figur 3:: den vergrößerten Ausschnitt aus Fig. 1 nach der Verformung und
- Figur 4:: das Montagewerkzeug in perspektivischer Sicht.

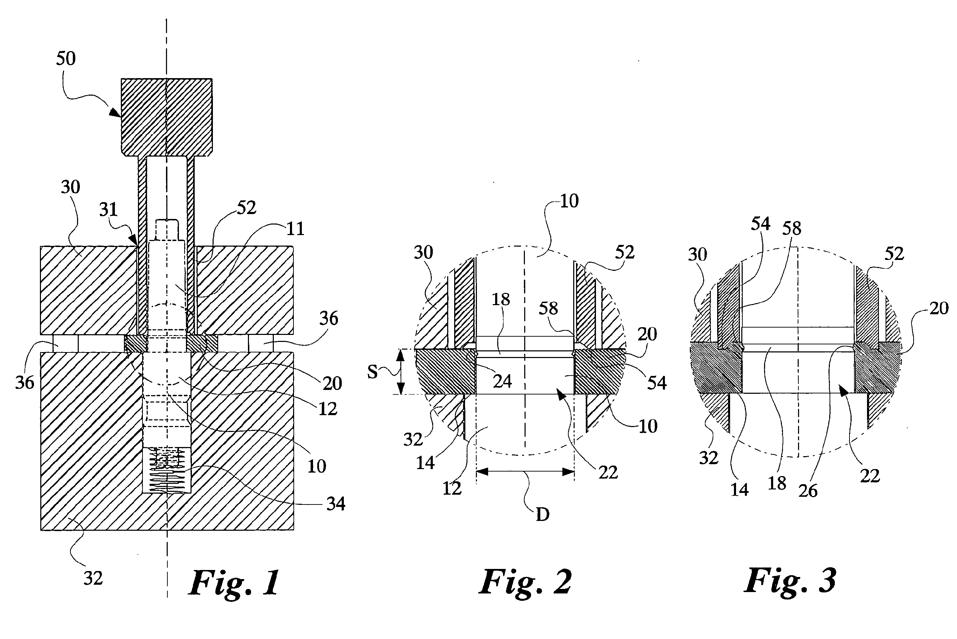

Die Figuren zeigen eine erfindungsgemäße Verbindung unmittelbar vor bzw. nach ihrer erfindungsgemäßen Herstellung. Die Verbindung ist gebildet aus einem flachen Stützhebel (Bauteil) 20 der Dicke S mit einer Durchgangsbohrung 22 (Durchmesser D). In der Durchgangsbohrung 22 wird - wie dies in Fig. 1 dargestellt ist - eine Achse 10 mit einem Bund 14 angeordnet. Die Achse 10 ist so bemessen, dass sie mit dem kleineren Durchmesser 11 noch in der Bohrung 22 spielbehaftet und daher verschiebbar ist, wobei der Abstand zwischen der Umfangsfläche der Achse 10 und der Wandung der Bohrung 22 nicht maßstabsgetreu dargestellt ist.

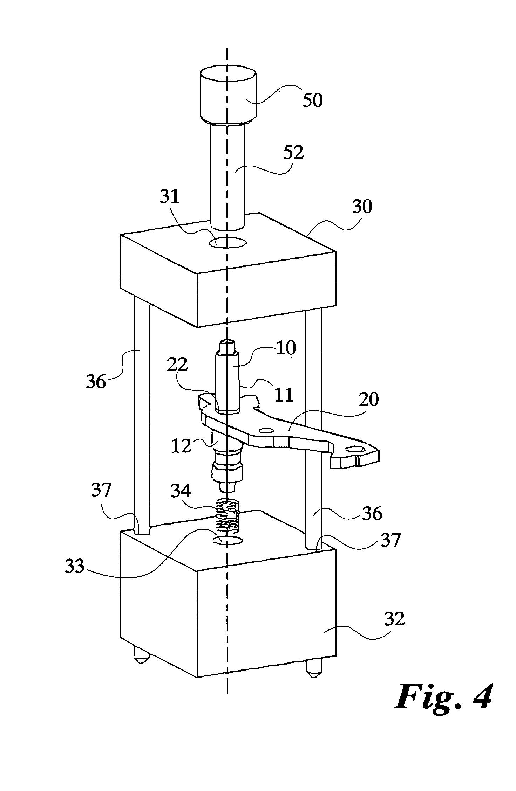

Zum Festlegen der Achse 10 in der Bohrung 22 und zur Führung des Presswerkzeugs 50 wird das Montagewerkzeug eingesetzt. Das Montagewerkzeug besteht aus zwei mit je einer Aufnahmebohrung 31,33 versehenen Montageplatten 30,32, zwischen denen der Stützhebel 20 einklemmbar ist. Die Montagereihenfolge erfolgt gemäß Fig. 4 von unten nach oben.

Die Achse 10 wird in die Bohrung 22 des Stützhebels 20 mit ihrem kleineren Durchmesser 11 eingelegt und mit ihrem größeren Durchmesser 12 nach unten gerichtet. Die Achse 10 wird dann in die als Sackloch ausgebildeten Aufnahmebohrung 33 der ersten, unteren Montageplatte 32 eingeführt. In dem Sackloch 33 befindet sich die Schraubenfeder 34, gegen die sich beim Zusammenführen der Teile des Montagewerkzeugs die Achse mit dem größeren Durchmesser 12 abstützt.

Die Montageplatten 30, 32 sind zueinander parallel verschiebbar. Hierzu sind mindestens zwei zylindrische Führungsstangen 36 vorhanden, die in Bohrungen der oberen Montagplatte 30 oder in Bohrungen 37 der unteren Montagplatte 32 oder in beiden Montageplatten gleiten können.

Die Aufnahmebohrung 31 der oberen (zweiten) Montageplatte 30 dient der Aufnahme der Achse von unten und der Aufnahme des Presswerkzeugs 50 von oben. Das Presswerkzeug hat oben einen verdickten Schlagkopf und zum Bauteil (Stützhebel) hin gerichtet eine zylindrische Presshülse 52. Die zylindrische Presshülse 52 wird von der Bohrung 31 geführt und nimmt im Inneren die Achse 10 mit ihrem kleineren Durchmesser 11 auf.

Zum Klemmen von Achse und Stützhebel werden die Montageplatten zueinander bewegt. Die untere Montageplatte 32 nimmt die Achse 10 bis zur Stosskante des Bundes 14 auf. Die Feder 34 in der Tiefe der Sacklochbohrung 33 der ersten Montageplatte veranlasst die Anlage der Achse mit der Stosskante 14 (Bund) an der Unterseite des Stützhebels, wodurch Achse und Stützhebel 20 zueinander lagenfixiert sind.

Um einen dauerhaften Festsitz der Achse 10 in der Bohrung 22 zu erhalten, wird die Achse 10 unter Verwendung des Presswerkzeugs in axialer Richtung gestaucht. Das Presswerkzeug 50 umfasst ein hülsenförmig ausgebildetes Stempelteil (zylindrische Druckhülse 52), welches passend über den kleinen Durchmesser 11 der Achse übergreift. Der Außendurchmesser der Druckhülse 52 ist so ausgebildet, dass sie in die Bohrung 31 der oberen Montageplatte 30 eintauchen kann. Die Stempelfläche der Druckhülse ist als ringförmiger Frontbereich des Zylinders 52 ausgebildet. Der Frontbereich ist am Außenrand als ringförmige Druckfläche 54 und am Innenrand als in der Stauchrichtung zurückliegende Ringfläche 58 ausgebildet. Die in Stauchrichtung zurückliegende Ringfläche 58 eilt der Druckfläche nach und erfasst die durch die Stauchung entstehende Materialverdrängung 26 an der Achse 10 zeitlich und räumlich nacheilend. Die beiden Ringflächen 54, 58 müssen nicht immer senkrecht zur Achse der Druckhülse ausgebildet sein. Die Flächen können auch stückweise in Achsrichtung vor- und zurückgesetzt sein, so dass sich eine wellenförmige Wulst bei der Materialverdrängung ergibt.

Das Gegenlager (Gegendruckstück) während des Stauchvorgangs bildet die erste Montageplatte 32 auf der der flache Stützhebel sich abstützt.

Zum Deformieren des flachen Stützhebels 20 wird die Druckhülse 52 mit einem Schlag definierter Stärke auf den Schlagkopf des Presswerkzeugs 50 oder mit einer definierten Bewegung abgesenkt, wodurch der Umfang der Bohrung des Bauteils plastisch gestaucht wird. Dabei fließt Material des Stützhebels in radialer Richtung in die Bohrung. Die Achse 10 hat eine Ringnut 14 (Freiraum) in die das durch die Verformung verdrängte Material des Stützhebels eintreten kann, wodurch eine sichere Festlegung der Achse in der Wandung der Bohrung erfolgt. In der Achse können ebenfalls Längsnuten vorhanden sein, in die die Materialverschiebung eintreten kann. Solche Längsnuten sind in der Figur jedoch nicht gezeigt.

## Patentansprüche

1. Verfahren zur unlösbaren Festlegung einer Achse (**10**) in einem flachen Bauteil (**20**) in Anwendung bei einem Leistungsschalter, bzw. Laststrennschalter, insbesondere zur Befestigung einer Achse in einem Stützhebel eines Schaltschlosses, mit folgenden Verfahrensschritten:
- Anordnen der mit zwei Durchmessern (**11,12**) ausgebildeten Achse (**10**) in einer Bohrung (**22**) des Bauteils (**20**), wobei die Achse (**10**) mit der Stosskante (**14**) des größeren Durchmessers (**12**) gegen den Umfang (**24**) der Bohrung (**22**) zur Anlage kommt,
- Verformen des flachen Bauteils (**20**) im Bereich der Bohrung (**22**) parallel zur Achse (**10**) mittels eines rohrförmigen Presswerkzeugs (**50**), welches gegen den Umfang (**24**) der Bohrung (**22**) gepresst wird, so dass der Umfang (**24**) derart verformt wird, dass die durch das Pressen gebildete Materialverdrängung (**26**) des Bauteils (**20**) in das Bohrungsinnere tritt und die Achse (**10**) am kleineren Durchmesser (**11**) in der Bohrung (**22**) festgelegt wird.

2. Verfahren nach Anspruch 1, **dadurch gekennzeichnet, dass** zum Festlegen der Achse (**10**) in dem Bauteil (**20**) und zur Führung des rohrförmig ausgebildeten Presswerkzeugs (**50**) ein aus zwei mit je einer Aufnahmebohrung (**31, 33**) versehene Montageplatten (**30,32**) bestehendes Montagewerkzeug eingesetzt wird, derart,
dass das Bauteil (**20**) mit in seiner Bohrung (**22**) aufgenommenen Achse (**10**) zwischen die Montageplatte (**30,32**) einlegt wird, wobei in der Aufnahmebohrung (**31**) der zweiten Montageplatte (**30**) das Presswerkzeug (**50**) die Achse (**10**) umfassend und in der Aufnahmebohrung (**33**) der ersten Montageplatte (**32**) die Achse (**10**) zur Aufnahme kommt und
der Umfang (**24**) der Bohrung (**22**) für die Materialverdrängung (**26**) mit dem Presswerkzeug (**50**) beaufschlagt wird.

3. Verfahren nach einem der vorhergehenden Ansprüche, **dadurch gekennzeichnet, dass** die Materialverdrängung (**26**) in einen in der Achse (**10**) vorhandenen Freiraum (**18**), insbesondere in eine Nut vorgenommen wird.

4. Verfahren nach einem der Ansprüche 2 oder 3, **dadurch gekennzeichnet, dass** nach Einlegen der Achse (**10**) in das Montagewerkzeug die Achse (**10**) von einer Druckfeder (**34**) derart beaufschlagt wird, dass die Stosskante (**14**) des größeren Durchmessers (**12**) der Achse (**10**) gegen den Umfang (**24**) der Bohrung (**22**) zur Anlage kommt.

5. Mit einer Achse (**10**) versehener **Stützhebel** (**20**) für ein Schaltschloss, insbesondere eines Leistungsschalters bzw. Laststrennschalters, bestehend aus dem Stützhebel (**20**) mit einer Bohrung (**22**) für die Aufnahme der Achse (**10**), **dadurch gekennzeichnet, dass** der Stützhebel (**20**) am Umfang der Bohrung (**22**) eine ringförmige Materialverdrängung (**26**) aufweist, die durch Pressen oder Stauchen des Werkstoffs am Umfang der Bohrung (**22**) des Stützhebels (**20**) durch plastische Verformung erzielt wird, indem auf den Umfang der Bohrung (**22**) Druck ausgeübt wird, wobei ein Teil der Materialverdrängung (**26**) einen Raum in der Bohrung (**22**) zwischen Bohrung und Achsfläche wenigstens teilweise ausgefüllt und damit die Achse (**10**) im Stützhebel (**20**) kraftschlüssig festgelegt ist.

6. Stützhebel nach Anspruch 5, **dadurch gekennzeichnet, dass** in der Achse (**10**) ein Freiraum (**18**) vorhanden ist, in den die Materialverdrängung (**26**) eintreten kann.

7. Stützhebel nach Anspruch 6, **dadurch gekennzeichnet, dass** der Freiraum (**18**) mindestens eine achsumlaufende Nut ist.

8. Stützhebel nach einem der Ansprüche 6 oder 7, **dadurch gekennzeichnet, dass** der Freiraum (**18**) in Form mindestens einer in Achsrichtung verlaufenden Einkerbung ausgebildet ist.

9. **Montagewerkzeug** zur Befestigung einer mit zwei Durchmessern (**11,12**) ausgebildeten Achse (**10**) in einer Bohrung (**22**) eines flachen Bauteils (**20**), wobei die Achse (**10**) in der Bohrung (**22**) mit dem kleineren Durchmesser (**11**) aufgenommen wird, mit einem Presswerkzeug (**50**), welches als rohrförmiger Körper (**52**) ausgebildet ist, mit einem Innendurchmesser passend für den kleineren Durchmesser (**11**) der Achse (**10**),
bestehend aus folgenden Einzelteilen:
einer ersten Montageplatte (**32**) mit einer Bohrung (**33**) passend für den größeren Durchmesser (**12**) der Achse (**10**) und
einer zweiten, zur ersten Montageplatte (**32**) parallel verschieblichen Montageplatte (**30**) mit einer Bohrung (**31**) passend für den Außendurchmesser des rohrförmigen Körpers (**52**) des Presswerkzeugs (**50**).

10. Montagewerkzeug nach Anspruch 9, **dadurch gekennzeichnet, dass** in der den größeren Durchmesser (**12**) der Achse (**10**) aufnehmenden Bohrung (**33**) der ersten Montageplatte (**32**) eine Feder (**34**) angeordnet ist, die beim Zusammenführen der Montageplatten (**30, 32**) bei eingelegter Achse (**10**) und zwischengelegtem Bauteil (**20**) die Stoßkante (**14**) des größeren Durchmessers (**12**) der Achse (**10**) gegen das flache Bauteil (**20**) andrückt.

11. Montagewerkzeug nach einem der Ansprüche 9 bis 10, **dadurch gekennzeichnet, dass** eine rechtwinklig zur Pressrichtung ausgebildete Stempelfläche der zylindrischen Druckhülse (**52**) des Presswerkzeugs aus einem voreilenden (**54**) und einem nacheilenden Ring (**58**) besteht.

12. Montagewerkzeug nach Anspruch 11, **dadurch gekennzeichnet, dass** der nacheilende Ring (**58**) innen liegt.
